# EUROPEAN PATENT APPLICATION

(11) **EP 2 336 515 A2**
(43) Date of publication of application: **22.06.2011**
(21) Application number: 10194660.6
(22) Date of filing: 13.12.2010
(51) Int. Cl.: F01N 3/20

(54) **Urea delivery tank module**

(30) Priority: 15.12.2009 US 638278
(71) Applicant: Delphi Technologies, Inc., Troy, MI 48007 (US)
(72) Inventor: Radilllo, Alfredo, 32472, Juarez (MX); Castillo, Jesus, 32546, Cd. Juarez (MX); Chavez, Isai, 32563, Cd. Juarez (MX); Michale, Michael J., El Paso, TX 79912 (US)
(74) Representative: Denton, Michael John

(57) **Abstract**

A liquid reductant dosing module for a combustion exhaust treatment system (5) is disclosed comprising:
(a) an enclosed reservoir (33) comprising a top, a bottom, one or more sides, an inlet (25), and an outlet (27, 31);
(b) a heater (32) disposed in the reservoir;
(c) a filter element (36) disposed between the outlet (27, 31) and the liquid reductant in the reservoir; and
(d) a heat sink member (35) in thermal contact with the heater (32), disposed between the filter element (36) and the outlet (27, 31).

## Description

### TECHNICAL FIELD

This invention relates to a reservoir for a fluid dosing system. More specifically, the invention relates to a reservoir for holding a reducing agent for introduction into a combustion exhaust gas.

### BACKGROUND OF THE INVENTION

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean bum engines, industrial boilers, process heaters or other process streams.

In order to reduce NOₓ emissions, it is known to use a selective catalytic reduction (SCR) device to treat an exhaust flow and to significantly reduce NOₓ emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO2004111401 discloses such a device.

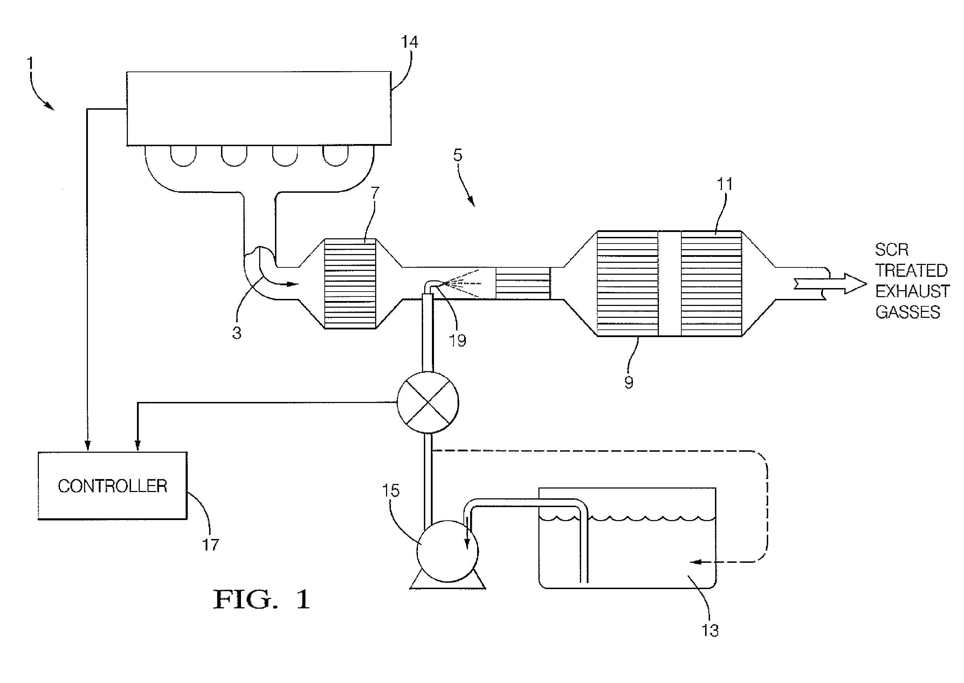

The general operation of an SCR device is shown in FIG. 1, in which a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs SCR treatment of NOₓ using ammonia derived from a source of urea as a chemical reductant. A slip catalyst 11 may be located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

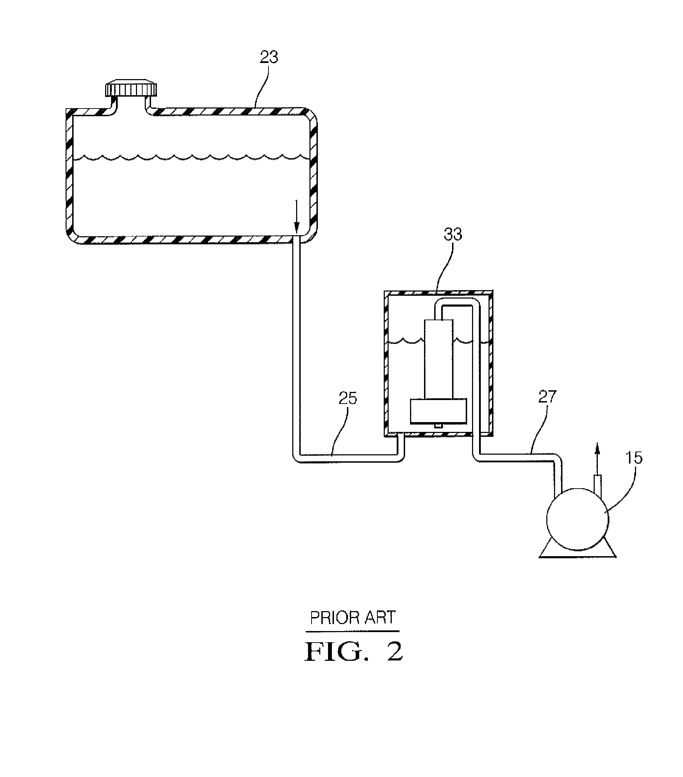

As a 32.5% urea solution freezes at -11.5°C, urea delivery systems must be adapted for delivery of liquid urea to the vehicle exhaust system under conditions that would normally cause the liquid urea to freeze. One solution would be to simply heat the storage tank 13. However, this can require substantial quantities of energy to maintain the entire storage tank 13 in a liquid state and can take significant time to thaw if the tank has become completely frozen. An alternative arrangement is to place a smaller reservoir downstream of the storage tank that can be unfrozen quickly and/or maintained as liquid more efficiently since it contains a smaller amount of liquid urea. Such an arrangement is shown in FIG. 2, with urea flowing from storage tank 23 into dosing reservoir 33 through inlet 25, and then pumped out of dosing reservoir 33 by pump 15 through outlet 27 from where it flows to the exhaust stream as shown in FIG. 1. Alternatively, the dosing reservoir can be positioned adjacent to and in physical contact with the storage tank or even inside the storage tank so that heat from the heated dosing reservoir during prolonged periods of operation will help thaw the storage tank or maintain it in a liquid state.

In any case, a liquid reductant reservoir (whether it is storage tank 13 or smaller dosing reservoir 33) will need to be heated in order to provide liquid reductant to the exhaust system. One proposed approach has been to use a submerged ceramic PTC heater in the reservoir. However, this approach provides heat at the bottom of the reservoir, but not at the top. As liquid reductant is dosed into the exhaust system, the level in the reservoir drops, resulting in a cavity of dead air space forming between the frozen reductant toward the top of the reservoir and a level of liquid underneath, which can result in poor heat transfer to the remaining frozen urea. Further, as the liquid urea level continues to drop, the ceramic PTC heater element may itself become exposed to air, at which point its self-regulating heating function will result in restricted power to the heater for further melting of frozen urea.

An alternative heater approach is to use a vertical ceramic PTC rod heater that runs from the top to the bottom of the urea reservoir. This approach can provide good heating near the top of the reservoir, but may not heat the bottom quickly enough to provide liquid urea for exhaust treatment right after vehicle startup. Also, as the urea level drops during dosing, exposure of the top of the ceramic PTC rod heater to the air can result in power reduction due to the heater's self-regulating function.

Therefore, there is a need in the art for providing heat to a reservoir for use in a dosing system that addresses the above mentioned problems.

### SUMMARY OF THE INVENTION

These and other advantages and features will become more apparent from the following description taken in conjunction with the drawings.

According to the present invention, there is provided a liquid reductant dosing module for a combustion exhaust treatment system comprising:
(a) an enclosed reservoir comprising a top, a bottom, one or more sides, an inlet, and an outlet;
(b) a heater disposed in the reservoir;
(c) a filter element disposed between the outlet and the liquid reductant in the reservoir; and
(d) a heat sink member in thermal contact with the heater, disposed between the filter element and the outlet.

In one exemplary embodiment, the outlet, heater, filter element, and heat sink member are integrated together in a module that is mounted to the bottom of the reservoir. More specifically, this bottom-mounted module may comprise:
(a) a holder element having a circumferentially-disposed mounting flange for mounting to the bottom of the reservoir, at least one vertical sidewall connected to the mounting flange, and a recessed bottom connected to the at least one vertical sidewall, the recessed bottom having an opening for the outlet opening therein;
(b) a screen member disposed above and substantially parallel to the recessed bottom; and
(c) a filter medium disposed below the screen member, thereby forming an interstice between the filter medium and the outlet opening in the recessed bottom;
   wherein the heater extends through an opening in the screen and the heat sink member is thermally connected to the heater and extends into the interstice

Among other things, the invention provides a protected environment in the space between the filter element and the reservoir outlet that is heated by the heat sink member so that it can be readily thawed or maintained as liquid, from which liquid reductant may be readily drawn following a cold startup under freezing conditions. The location of the heat sink between the filter element and the outlet provides a protected environment for the heat sink member. In freezing conditions when the tank may be completely frozen upon vehicle startup, this configuration could help enable the heater element to quickly thaw a pool of urea in the space between the outlet and the filter element. The thawed urea in this space would be immediately adjacent to the outlet so that would be ready for quick use soon after vehicle startup.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 depicts a known SCR system.

FIG. 2 depicts a known reservoir configuration for dosing liquid reductant as part of an SCR system.

FIG. 3 shows an exemplary liquid reductant dosing module according to the invention.

FIG. 4 shows an exemplary liquid reductant dosing module according to the invention.

FIG. 5 depicts a perspective view integrated module of an outlet, heater, filter element, and heat sink member that us useful in an exemplary embodiment of the invention.

FIG. 6 shows a side view of the integrated module of FIG. 4 in an exemplary liquid reductant dosing module according to the invention.

### DESCRIPTION OF THE PREFERRED EMBODIMENT

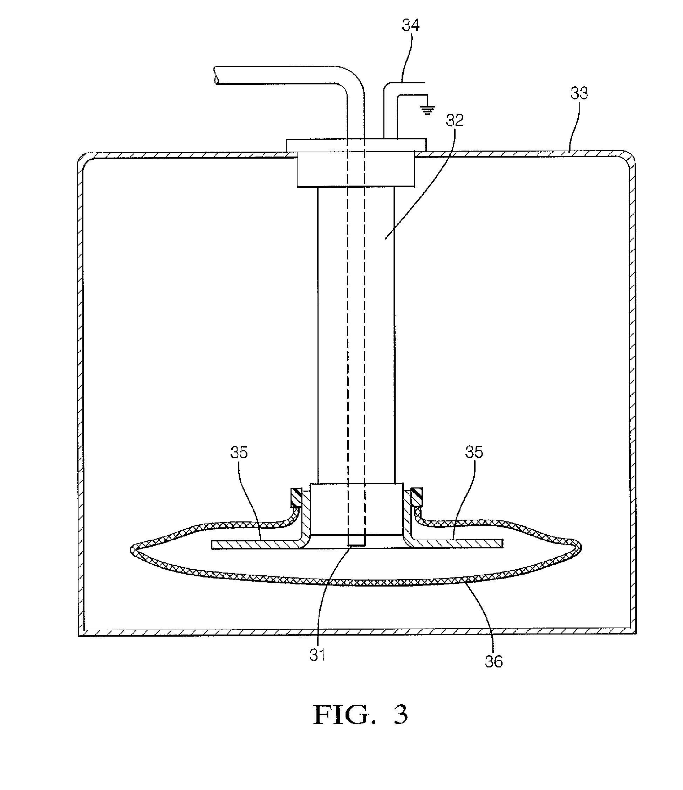

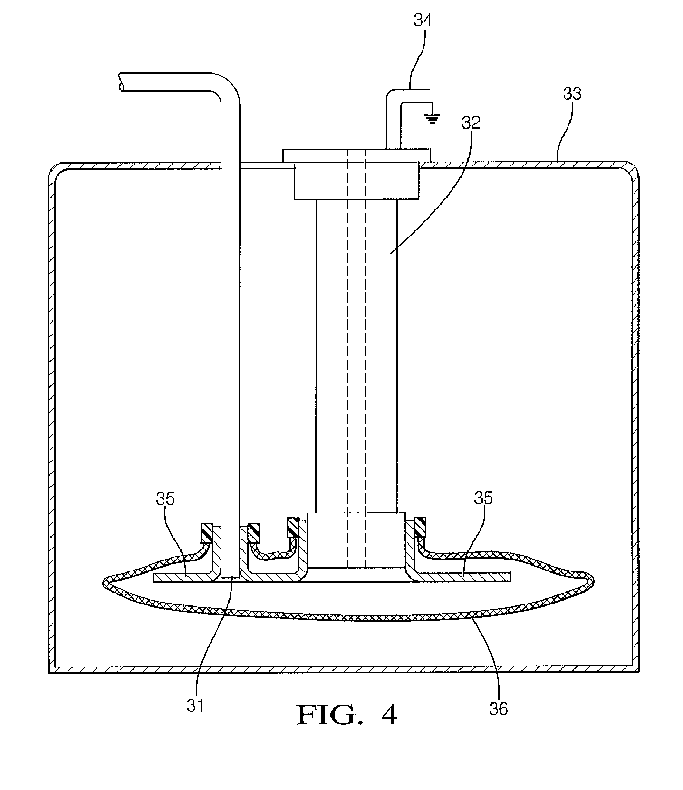

Referring now to the Figures, the invention will be described with reference to specific embodiments, without limiting same. Turning now to FIGS. 3, and 4, there is shown a cross-section view of a liquid reductant reservoir 33 of the type shown in FIG. 2. Of course, the invention is applicable to any sort of vessel for liquid reductant as well, such as a reductant storage tank 13 as shown in FIG. 1. Rod heater 32 is mounted through an opening in the top of the reservoir, and electric leads 34 provide power to the heater. In an exemplary non-limiting embodiment, the heater can be overmolded into the cover. The heater of any known sort that is suitable for submerged use in liquid reductants such as urea. In one exemplary embodiment, the heater is self-regulating such as a PTC (positive temperature coefficient) heater, which may use a metalized positive temperature coefficient ceramic in the heating element whose resistance increases as a function of increasing temperature. Such varying resistance makes the heater self regulating and avoids over-heating. Another exemplary self-regulating rod heater useful as rod heater 32 is more fully described in the U.S. patent application Serial No. 12/638,364 filed on December 15, 2009 entitled "Liquid Reductant Dosing Module with Heating Device". This heater has a hollow tube made out of a material such as stainless steel with windings along the inside of the tube of a resistive material that provides heat when electric current is run through it. Self-regulation of resistance heaters can also be accomplished through control circuitry (e.g., a Wheatstone bridge control circuit) or through microprocessor control of the power supplied to the heater. Other types of heaters and configurations, e.g., dome heaters, or PTC heaters having rod or dome configurations, may also be used as is known in the art.

With further reference to FIGS. 3 and 4, the reservoir 33 also has a liquid reductant inlet (not shown) and an outlet in the form of pickup tube 31. Pickup tube 31, which may be of any suitable material, e.g., stainless steel, is also affixed to top of reservoir 33 and extends downward through an opening in reservoir 33 to draw liquid reductant from near the bottom of the reservoir. In an exemplary embodiment, the pickup tube 31 is in contact with or is proximate to the rod heater 32 in order to limit any frozen blockages in the pickup tube. In one exemplary embodiment as shown in FIG. 3, the pickup tube 31 is inside a hollow rod heater 32. In another exemplary embodiment as shown in FIG. 4, the pickup tube is adjacent to rod heater 32.

With continuing reference to FIGS. 3 and 4, there is shown a filter element 36 is disposed around the open end of pickup tube 31 and one or more heat sink members 35 are disposed in the space between the open end of pickup tube 31 and the filter element 36. The filter element 36 can be of any configuration that is effective to filter liquid reductant before it enters the open end of pickup tube 31, but as shown in FIGS. 3 and 4 is a pillow-shaped filter element. The filter element comprises a filter medium that can be any of a number of well-known filter media depending on the filtration requirements for the liquid reductant dosing system and its components, e.g., the pump. In one exemplary embodiment, the filter medium is a stainless steel mesh with a mesh size of 7 to 70 µm. Other materials may be used instead of stainless steel, such as acetal or polyoxymethylene. In another exemplary embodiment, especially where the filter medium is supported, the filter medium may be a high efficiency media having a mesh size of 7 to 70 µm, or may be a combination of multilayer media with varying mesh sizes.

Heat sink member 35, which may be of any suitable conductive material that is compatible with the liquid reductant environment (e.g., aluminum with an anodized surface or PTFE coating, stainless steel, or any other heat-conductive metal that is compatible with the liquid reductant environment), is connected to the bottom area of rod heater 32 to enhance transfer of heat from rod heater 32 to the liquid reductant in the reservoir, and more particularly to maintain the area inside of filter element 36 in a liquid state.

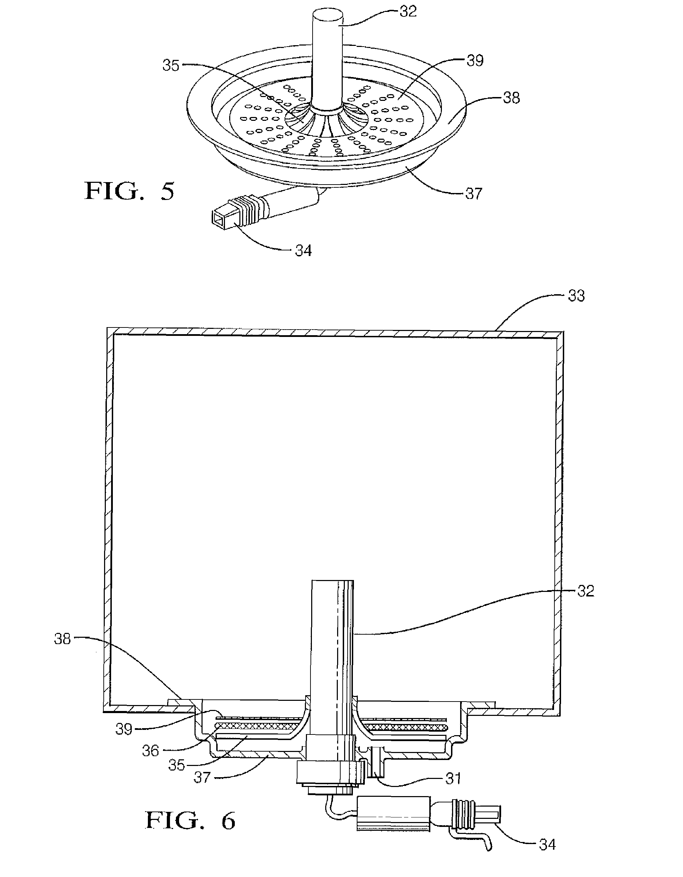

Turning now to FIGS. 5 and 6, there is shown an alternate configuration of an exemplary embodiment of the invention having an integrated module comprising an outlet port, heater, filter element, and heat sink member that is suitable for mounting on the bottom of a liquid reductant reservoir. Reference characters for FIGS. 5 and 6 match those for FIGS. 3 and 4 for analogous components, e.g., reservoir 33, heater 32, etc. FIG. 5 is a perspective view of the integrated module itself, and FIG. 6 is a cross-section view of the integrated module mounted in a liquid reductant reservoir. Referring to both FIGS. 5 and 6, holder 37 having mounting flange 38 is mounted in an opening in the bottom of liquid reductant reservoir 33 by known techniques such as welding or with a threaded fitting. A central opening in the bottom of holder 38 accommodates electric leads 34 for centrally-mounted heater 32. Another central opening in the bottom of holder 37 accommodates outlet 31, which is in fluid communication with liquid reductant in the reservoir 33. Protective screen 39 is disposed along the top surface of the holder 37 radially inward from the mounting flange 38, and filter media 36 is disposed thereunder. Optionally, a second screen may be used underneath the filter media 36 so that the filter media is sandwiched between two screens, thus providing support and structural integrity. Screen 39 screens out any large particles in the liquid reductant as well as protecting the filter media 36 against damage from penetration by ice crystals that may form in the main body of the reservoir 33. Holder 37, flange 38, and screen 39 may made of any suitable material such as stainless steel, nylon materials such as Zytel®, or polyphthalomides such as Amodel®. Heat sink member 35 is disposed in the interstice between the filter media 36 and the outlet 37, and helps thaw and/or maintain the liquid in that space in liquid form, providing a mini-reservoir of reductant in liquid form available for dosing into an exhaust system immediately or shortly after a cold startup under freezing conditions.

## Claims

1. A liquid reductant dosing module for a combustion exhaust treatment system (5) comprising:
(a) an enclosed reservoir (33) comprising a top, a bottom, one or more sides, an inlet (25), and an outlet (27);
(b) a heater (32) disposed in said reservoir;
(c) a filter element (36) disposed between said outlet (27, 31) and the liquid reductant in said reservoir (33); and
(d) a heat sink member (35) in thermal contact with said heater (32), disposed between said filter element (36) and said outlet (27, 31).

2. A liquid reductant dosing module according to claim 1 wherein said outlet (27,31) is located proximate to the bottom of said reservoir.

3. A liquid reductant dosing module according to claim 1 wherein said outlet comprises a pickup tube (31) extending along a first axis extending between the bottom of said reservoir and the top of said reservoir, said pickup tube (31) having an open end proximate to the bottom of said reservoir.

4. A liquid reductant dosing module according to 3 wherein said heater (32) is a rod-shaped heater extending along a second axis, which may be the same as or different than said first axis, extending between the bottom of said reservoir and the top of said reservoir.

5. A liquid reductant dosing module according to claim 4 wherein said rod-shaped heater (32) is hollow and wherein said pickup tube (31) is disposed inside said rod-shaped heater (32).

6. A liquid reductant dosing module according to claim 5 wherein said pickup tube (31) is disposed adjacent to said rod-shaped heater (32).

7. A liquid reductant dosing module according to claim 6 wherein said heat sink member (35) is in thermal contact with said pickup tube (31).

8. A liquid reductant dosing module according to claim 1 wherein said heater (32) is a rod-shaped heater extending along a second axis extending between the bottom of said reservoir and the top of said reservoir.

9. A liquid reductant dosing module according to claim 1 wherein said heat sink (35) element comprises aluminum having an anodized aluminum layer or a polytetrafluoroethylene coating thereon or stainless steel.

10. A liquid reductant dosing module according to claim 1 wherein said filter element (36) comprises a stainless steel mesh, acetal, or polyoxymethylene filter media.

11. A liquid reductant dosing module according to claim 1 wherein said outlet (27), heater (32), filter element (36), and heat sink member (35) are integrated together in a module that is mounted to the bottom of said reservoir.

12. A liquid reductant dosing module according to claim 11 wherein said bottom-mounted module comprises:
(a) a holder (37) element having a circumferentially-disposed mounting flange (38) for mounting to the bottom of said reservoir, at least one vertical sidewall connected to said mounting flange, and a recessed bottom connected to said at least one vertical sidewall, said recessed bottom having an opening for said outlet opening (31) therein;
(b) a screen member (39) disposed above and substantially parallel to said recessed bottom; and
(c) a filter medium (36) disposed below said screen member, thereby forming an interstice between said filter medium and the outlet opening in said recessed bottom;
wherein said heater (32) extends through an opening in said screen (39) and said heat sink member (35) is thermally connected to said heater and extends into said interstice.
